# EUROPEAN PATENT SPECIFICATION

(11) **EP 3 262 303 B1**
(45) Date of publication and mention of the grant of the patent: **20.01.2021**
(21) Application number: 16702796.0
(22) Date of filing: 02.02.2016
(51) Int. Cl.: F04D 19/04, F04D 29/70, F16K 11/02

(54) **GAS SUPPLY APPARATUS**
GASVERSORGUNGSVORRICHTUNG
APPAREIL D'ALIMENTATION EN GAZ

(30) Priority: 23.02.2015 GB 201502993
(43) Date of publication of application: 03.01.2018
(73) Proprietor: Edwards Limited, Burgess Hill West Sussex RH15 9TW (GB)
(72) Inventor: MANSON, David Paul, Burgess Hill Sussex RH15 9TW (GB); NORTH, Phillip, Burgess Hill Sussex RH15 9TW (GB); LEE, Myoungsuck, Cheonan-si Chungcheongnam-do 31093 (KR)
(74) Representative: Rawlins, Kate Cecilia
(86) International application number: PCT/GB2016/050229
(87) International publication number: WO 2016/135439

(56) References cited:
- WO-A1-2007/107781
- WO-A1-2013/144581
- DE-C1- 10 152 186

## Description

### FIELD OF THE INVENTION

The present invention relates to a multistage vacuum pump purge gas supply apparatus and a multistage vacuum pump comprising a purge gas supply apparatus.

### BACKGROUND OF THE INVENTION

Vacuum pumps are used in many industrial applications, such as steel manufacture, refining, scientific instruments and semiconductor or electronic component manufacture (including, but not limited to Li-ion battery production, solar cell, transistor, integrated circuits and flat panel display manufacture). The present invention is described below with reference to semiconductor manufacture, but it is understood that the invention is not limited to vacuum pumps used exclusively in this field.

Vacuum pumps used to pump gaseous fluid from semiconductor tools typically employ, as a backing pump, a multistage positive displacement pump. Such a semiconductor vacuum pump generally has a number of pumping stages that progressively compress the process gas until exhausting it at slightly above atmospheric pressure. Purge gas is also progressively introduced into the pump stages, typically in proportion to the compression ratio of the particular pump stage.

During semiconductor processes such as chemical vapour deposition processing, deposition gases are supplied to a process chamber to form a deposition layer on the surface of a substrate. As the residence time in the chamber of the deposition gas is relatively short, only a proportion of the gas supplied to the chamber is consumed during the deposition process. Consequently, unconsumed gas molecules pumped from the chamber by a vacuum pump can pass through the pump in a highly reactive state. As a result, pump components can be subjected to damage due to corrosion and degradation resulting from the pumping of the aggressive, unconsumed gas molecules.

To dilute process gases as they pass through the pump, an inert purge gas, such as nitrogen (or clean dry air (CDA) if appropriate) can be supplied to the pump. Nitrogen purge is recommended for many vacuum dry pumps used in the flat panel and semiconductor industry for reasons of safety, reliability and performance, whereas CDA can be used if the species of gases passing through the pump have a relatively low reactive state. Introducing the purge progressively through the pump mechanism stages provides the optimum combination of effectiveness and performance. The quantity of purge gas must be carefully controlled to avoid both under-dilution of the process gases, as this could lead to pumping reliability problems, and over-dilution of the process gases, as this could lead to unnecessary costs and loss of pumping performance.

It is known to have flow selector apparatus that typically consist of a pressurised manifold or pipe arrangement with a number of outlets through which the purge gas can enter the pump mechanism. Additionally, WO 2007/107781 describes a flow selector capable of varying the flow rate of gas into and from the flow selector. The outlets each have an aperture sized to provide a known flow rate dependant on the manifold pressure. The manifold is rotated to couple a manifold inlet to different sets of outlets. Such a device supplies a fixed amount of purge according the selected amount.

Moreover, there are occasions when for environmental and economic reasons it is desirable to minimise the nitrogen consumption. Step changes in the gas purge flow rates can be achieved by opening or closing actuation valves in various combinations. For a multistage pump this could require a large number of valves. It is also likely that the resulting purge rate combination would not be ideally matched to the process gas flow. Alternatively, manual adjustment of the restrictors can be carried out. This is time consuming and requires individual measurement of each stage purge to ensure that the required purge level had been achieved. WO2013/144581 describes a purge gas supply for a multistage vacuum pump wherein the supply apparatus comprises a plurality of outlets for supplying gas to respective ports at proportionally fixed gas flow rates. A control module is provided for controlling the gas flow to the inlet in response to a control signal thereby providing efficient purge gas distribution.

There is now a need to improve upon the known systems. Presently, purge systems can suffer from backflow of gases into the purge supply means as the vacuum pump cycles between operational states. For instance, the purge gas supply might be optimised for a condition when the pump operates at its ultimate pressure state. However, during roughing operations, the pressure of gas inside the vacuum pump's pumping chambers may increase above a threshold pressure resulting in ineffectual purge supply to the pump.

The present invention seeks to address or ameliorate some of the shortcomings associated with known systems and processes.

### SUMMARY OF THE INVENTION

In the broadest terms, the present invention aims to provide an improved purge gas supply that is less susceptible to the shortcomings of known systems. The purge supply of the present invention aims to reduce backflow or recirculation of pumped gases into the purge supply apparatus by providing an arrangement where the purge ports on a multistage vacuum pump contains purge gas at sufficient pressure to resist the backflow when the vacuum pump is operating outside of its ultimate pressure regime. We have found that the embodiments described below do not necessarily need a non-return valve to resist the unwanted pump gas back-flow.

More specifically, the present invention provides a multistage vacuum pump purge gas supply apparatus, comprising: a gas inlet in fluid communication with a plurality of gas outlets for supplying gas to respective purge ports of a multistage vacuum pump; and a flow controller disposed immediately upstream of the gas outlets, the flow controller comprising an input for receiving gas, a volume for containing gas at a given pressure, and a variable flow restrictor disposed between the volume and each of the outlets, wherein the variable flow restrictor is moveable with respect to the volume to facilitate continuous variance of the flow of gas in proportion to each of the outlets, between a first and second flow rate.

This offers an improved purge gas supply apparatus for a multistage vacuum pump that enables the purge supply to resist backflow or recirculation of gases being pumped by the vacuum pump during high pressure operations outside of the ultimate pressure operating characteristics.

Control orifices can be disposed before the outlets and can be arranged so that gas can be supplied to the respective purge ports at proportionally fixed gas flow rates.

Furthermore the variable flow restrictor can be arranged to provide a continuous range of rates of flow between a first and second flow rate. The first flow rate can be a predetermined maximum flow rate through the outlet. In other words, the maximum flow rate can be determined by the size of the outlet or other orifice. The second flow rate can be a predetermined minimum flow rate, or the second flow rate can be zero. Thus, a continuously variable flow rate is provided between to extremes in a given range of flow, as required for the specific multiple staged vacuum pump.

Additionally, the variable flow restrictor can comprise a first section arranged to connect the volume with each of the outlets, wherein the first section is moveable with respect to the volume. By moveable it is meant that the first section is either rotatable or linearly moveable with respect to the volume. The movement allows the flow to be adjusted by restricting or opening the restrictions, and thus the flow of gas. The first section can comprise a drum-like feature that is rotatable about a longitudinal axis, said drum can comprise a series of through-holes each arranged to connect an outlet with the volume and thus allow gas to flow to the purge ports. In other words, each through-hole cooperates with an aperture in the volume to allow gas to exit the volume such that movement of the first section relative to the volume enables provision of a continuous range of rates of flow between a first and second flow rate.

Alternatively, the first section can comprise a series of needle valves each arranged to connect an outlet with the volume. The rate of flow of gas through each needle valve can be set independently of one another to allow relative flow of gas through each outlet to be controlled independently and respectively to each other. The series of needle valves can comprise a plate section having a series of apertures to allow gas to pass to the outlet, and a series of adjustable stops or tapered needles, each arranged to cooperate with an aperture to restrict the flow of gas through the aperture. The plate and stops can be moveable with respect to one another to allow adjustment of the rate of flow of gas through each or every aperture. In other words, each needle valve can be pre-set to a given flow rate such that the flow through each needle valve is predetermined and proportional to the other needle valves.

### BRIEF DESCRIPTION OF THE DRAWINGS

A preferred embodiment of the present invention(s) will now be described, by way of example only, with reference to the accompanying Figures, in which:
Figure 1 is a schematic diagram of a known pump system comprising a purge gas supply;
Figure 2 is a schematic diagram of an embodiment of a purge gas supply apparatus embodying the present invention;
Figure 3 is another schematic diagram of an embodiment of the present invention;
Figure 4 is a schematic diagram of an alternative embodiment of the present invention; and
Figure 5 is a schematic flow diagram of another alternative embodiment of the present invention.

### DESCRIPTION OF A PREFERRED EMBODIMENT

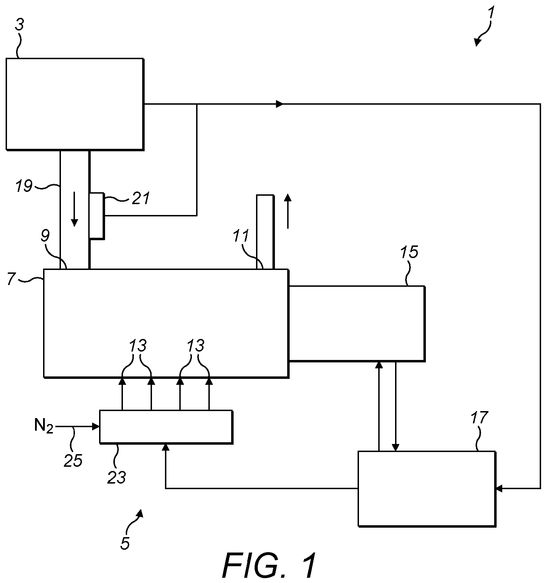

A schematic overview of a pump system 1 in fluid communication with a processing tool 3 is shown schematically in Figure 1. The pump system 1 is coupled to a variable purge system 5 operable in accordance with the present invention.

The vacuum pump system 1 comprises a multistage vacuum pump 7 having a pump inlet 9, a pump (exhaust) outlet 11 and a plurality of purge ports 13. An electric pump motor 15 drives the vacuum pump 7 in response to control signals from a system controller 17. The system controller 17 comprises a digital processor (not shown) configured to measure the operating current of the pump motor 15 to monitor the status of the vacuum pump 7.

In the present embodiment, the processing tool 3 is a chemical vapour deposition apparatus comprising a vacuum chamber (not shown), but of course the invention is not limited to CVD apparatus and can be applied to other processes or applications. The vacuum chamber is in fluid communication with the pump inlet 9 via a foreline 19. A gas sensor 21 can be provided in the foreline 19 to detect the type of gas present in the pump inlet 9 and to output a corresponding gas detection signal to the system controller 17.

The variable purge system 5 comprises a manifold 23 having a purge gas inlet 25 and a plurality of purge gas outlets, each connected to a port 13. Operation of the manifold 23 is controlled by the system controller 17. In this example purge ports 13 are provided for the 3/4 interstage purge, 4/5 interstage purge, low vacuum (LV), shaft seal (SS) and exhaust (Exh) stage of the vacuum pump 7. The purge gas is typically nitrogen (N₂).

Typically, in a known system, the rate of flow into the multi-stage vacuum pump is set to customer requirements during the manufacture and commissioning phases. It is usual to set the purge gas supply rate according to the requirements of the pump whilst it is running on a process cycle at its ultimate attainable pressure (the condition known as "running at ultimate"). Running in this condition reactive process gases from the process chamber evacuated by the pump pass through the pump, hence the need for a purge gas to improve the service lifetime of the pump.

However, the purge module might not be suitable for supplying purge gas to the pump during running conditions outside of the ultimate condition, for instance during a pump down phase (so-called "roughing") when the pressures of gases inside the pump chambers can be greatly increased. As a result, the pressure of purge gas can be overcome at the purge port and pumped gases might escape the pump volume and enter the purge gas module with undesirable consequences. Embodiments of the present inventive concept aim to reduce the risk of unwanted purge gas module contamination without the need to use additional non-return valves (which are considered to be an expensive solution to this problem).

Once set, a variable flow restrictor on a known system is left in position and not adjusted further. Thus, the predetermined flow of gas is determined by the size of these orifices and the pressure drop across them. If the gas pressure upstream of the orifices is insufficient then process gas passing through the pump can enter the purge gas supply system and recirculate within the purge apparatus. This is highly undesirable for many reasons, not least because particles in the process gas might block or restrict flow orifices, or corrosive gas can enter the purge system causing damage or malfunctioning of the purge supply.

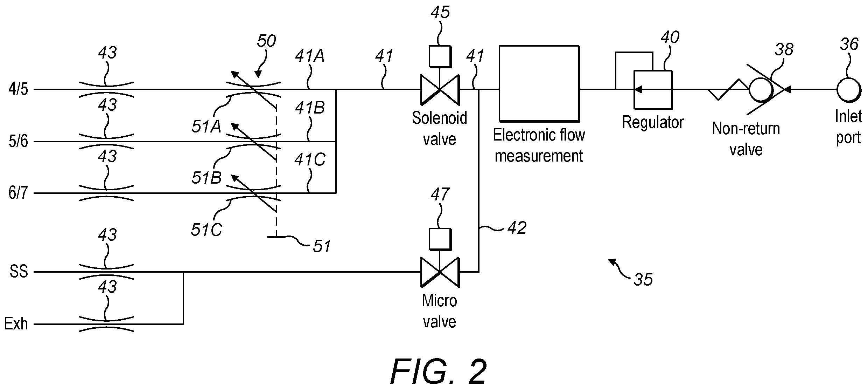

Figure 2 shows an embodiment of purge gas supply module 35 that embodies the present inventive concept. The module comprises an inlet 36 for receiving a supply of purge gas, typically nitrogen from a suitable source. A non-return valve 38 ensures gas cannot leak from the module inlet. A regulator 40 is used to measure and control flow of gas into the module and regulate the pressure within the system. The flow line then splits into two lines 41 and 42, whereby a first purge line 41 is used to supply gas to the inter-stage purge ports of the multi-stage vacuum pump and a second purge line 42 supplies gas to the shaft seal (SS) and exhaust port (Exh). In this example, there are three inter-stage purge ports, located between the fourth and fifth stage, fifth and sixth stage, and the six and seventh stages respectively. A plurality of fixed flow restrictor orifices 43 are used on each of the module to enable proportional flow of gas at different rates to the purge ports according to the requirements stipulated for efficient purge supply. Valves 45 and 47 are disposed on each line of the gas supply to enable the line to isolated from the supply if needs be.

The gas supply line 41 splits into three branches 41A, 41B and 41C upstream of a variable flow restrictor 50. The variable flow restrictor 50 is used to vary the flow of gas to all of the fixed restrictors 43 that supply purge gas to the inter-stage purge ports and the variable flow restrictor is located immediately upstream of fixed restrictor orifices and the inter-stage purge ports. The variable restrictor 50 comprises adjustment device 51 that is linked to all of the flow valves within the variable restrictor 50 such that a single adjustment is used to adjust the flow of gas to all the inter-stage purge ports supplied by the variable restrictor. This adjustment device can be manually or computer operated according to the desired needs of the purge system.

This arrangement provides a pressure drop across the flow restrictor arrangement such that the pressure of gas upstream of the fixed restrictors 43 (that is, immediately downstream of the variable restrictor 50) is sufficient to limit recirculation of gases being pumped by the vacuum pump. Furthermore, the pressure of gas upstream of the variable restrictor 50 is determined at least in part by the regulator and can be arranged to limit or prevent backflow of process gas from the pump into the purge system to a location within the purge system that could facilitate recirculation of process gases. In other words, the provision of a system according to the arrangement shown in figure 2 uses the purge supply pressure to reduce the risk process gas entering the purge system and passing through the orifices 43, variable controller 50 and three supply lines 41A-C to a location (single supply line 41) where the process gas could mix and recirculate with gas along a different line to the one that had allowed the process gas ingression to occur. The flow can be deduced from pressure gauge readings taken from gauges 52 and 54 disposed either side of the variable flow restrictor, although these gauges are not essential to the operation of the system but do provide useful readings for evaluation of the system's performance.

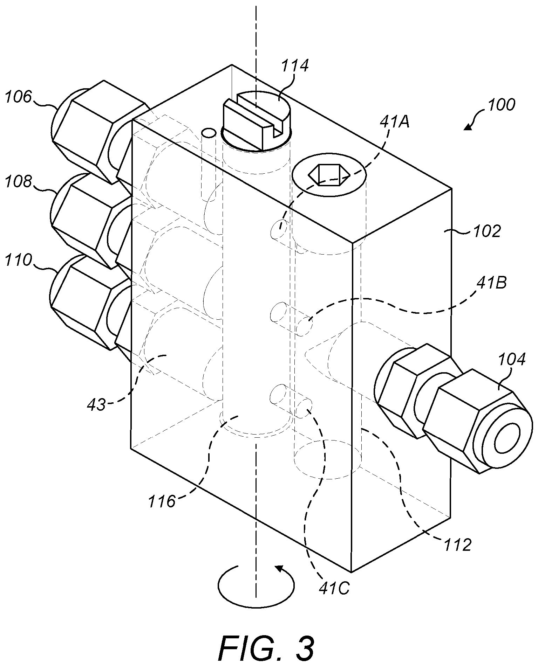

Figure 3 shows a first embodiment 100 of the present inventive concept, comprising a gas supply assembly 102. The assembly comprises a single inlet 104 to receive purge gas from the mass flow controller 40, and three outlets 106, 108 and 110, respectively. Each of the outlets is coupled to the appropriate respective purge port of the multi-stage vacuum pump. The fixed orifices 43 are located upstream of the outlets. The inlet opens into a manifold volume 112 where the purge gas can be maintained at a given purge supply pressure. The flow of gas to the ports is controlled by a flow adjustor barrel 114 that comprises three through holes 116. Each through hole is supplied by lines 41A, 41B and 41C respectively, which are in gas communication with the manifold 112. The through holes pass through the barrel in a radial direction and each is arranged to cooperate with one of three apertures provided by the opening of the respective supply line 41A-C.

The flow is controlled by rotating the adjustor barrel relative to the volume. Full flow is achieved when each of the through holes co-axially aligned with a respective aperture or supply line. The flow can be reduced by twisting the barrel so that the through holes and supply lines are now misaligned slightly thereby restricting gas flow through the through hole. The flow can be stopped completely if the barrel is twisted to an angle where the through holes no longer align with the supply lines and the passage for the gas is completely obstructed as a result. Thus, a continually variable flow of gas can be achieved through the restrictor, across a range of flows having a maximum flow rate and zero.

This embodiment has certain advantages over the known systems because the manifold provides a volume of pressurised gas close to the purge port on the pump. As a result, the purge gas supply module can be set up to provide optimal flow rates of purge gas when the pump is running at ultimate (that is, during low pressure operation) and to reduce or prevent ingression of pumped gas into the purge module when the pump is operating during roughing or pump down (that is during high pressure operation). The volume 112 can be arranged to hold gas at sufficient pressure such that purge gas can flow into the pump ports at the required rates during ultimate operation, but gas from the pump cannot flow into the purge module unless it overcomes the pressure of gas within the volume during other operating conditions.

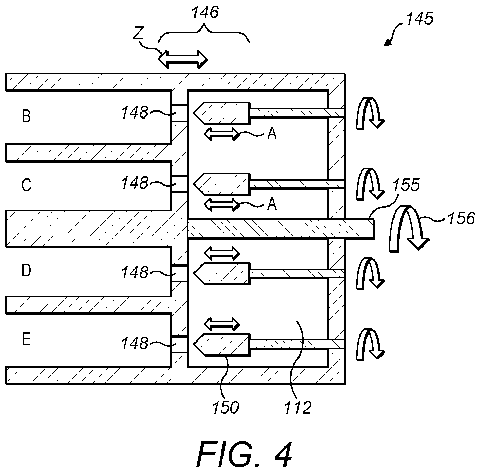

Figure 4 shows an alternative embodiment 145 of the present invention. In this embodiment, the volume 112 is provided as before, upstream of a series of flow restrictors 146. In this embodiment the restrictors comprise a needle valve arrangement consisting of an aperture 148 arranged to cooperate with a pin or stop 150 having a tapered point section. The effective size of the aperture (and hence the flow rate of gas through it) is controlled by varying how far the tapered section is inserted into the aperture. When the tapered section is outside of the aperture, then the flow of purge gas through the aperture is effectively determined by the size of the aperture. However, as the tapered section is moved into the aperture, so the effective size of the aperture is reduced in a continuous manner until the aperture physically engages with the tapered section and is closed thereby restricting flow through the aperture to zero.

In the embodiment shown there are four needle valve arrangements, each being connected to a purge port respectively (B, C, D and E). The valves can be pre-adjusted independently to determine the respective flow rates with respect to the two valve arrangements. A frame or mechanism 155 is provided to allow relative movement of the apertures and needles so that the overall flow of gas through to the outlets and purge ports can also be controlled. Hence, once set, the flow of gas through the system can be controlled by moving the needles relative to the apertures as indicated by arrows A or Z. This can be achieved by providing a manual control means, such as a twistable (156) threaded jack, or an electromechanical arrangement comprising a servo with appropriate drive and control means.

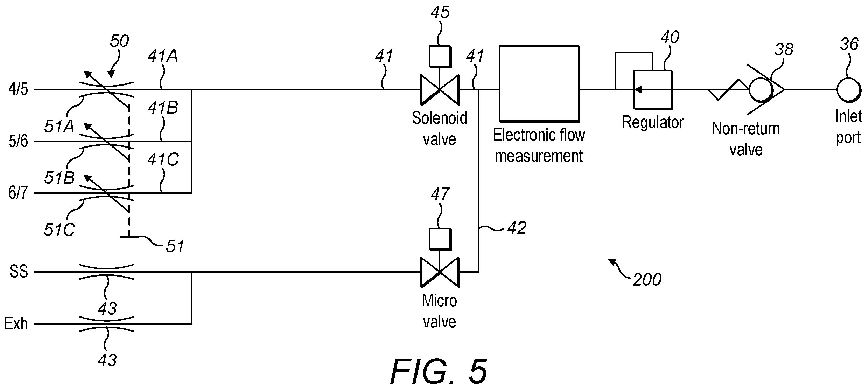

Figure 5 is a schematic diagram of a purge system 200 incorporating the second embodiment described above, or any alternative system that embodies the present inventive concept. In this arrangement, the features common to other systems described above have been provided with the same reference numerals. The system in figure 5 is similar to one shown in figure 2, however the fixed orifices 43 disposed between the purge port and variable regulator 50 in figure 2 are not required in the figure 5 embodiment. The function of the fixed orifices has been incorporated into the orifices 51A, 51 B and 51C used in the variable flow regulator arrangement. The second embodiment described above and shown in figure 4 can easily incorporate this arrangement whereby the apertures 148 are designed to provide the same function as the fixed aperture orifices 43 used in other embodiments.

Alternative embodiments of the present invention will be envisaged by the person skilled in the technical field without departing from the general inventive concept. For example, the first embodiment can comprise a sliding barrel as an alternative to the rotating barrel. As the barrel is slid in direction along its major axis the through-holes are no longer coaxially aligned with the apertures and so flow is restricted or reduced from a maximum amount. The amount of misalignment can be adjusted continuously and smoothly through a range of flow rates from zero to a maximum flow when coaxial alignment is achieved.

## Claims

1. A multistage vacuum pump purge gas supply apparatus (102), comprising:
a gas inlet (104) in fluid communication with a plurality of gas outlets (106) for supplying gas to respective purge ports (13) of a multistage vacuum pump (7); and
a flow controller disposed immediately upstream of the gas outlets (106), the flow controller comprising an input for receiving gas, a volume (112) for containing gas at a given pressure, and a variable flow restrictor (114; 146) disposed between the volume (112) and each of the outlets (106),
**characterised in that** the variable flow restrictor (114;146) is moveable with respect to the volume (112) to facilitate continuous variance of the flow of gas in proportion to each of the outlets (106), between a first and second flow rate.

2. Apparatus according to claim 1, wherein the variable flow restrictor (114; 146) is arranged to provide a continuous range of rates of flow between a first and second flow rate.

3. Apparatus according to claim 2, wherein the first flow rate is a predetermined maximum flow rate through the outlets (106).

4. Apparatus according to claim 2, wherein the second flow rate is a predetermined minimum flow rate, or wherein the second flow rate is zero.

5. Apparatus according to any of claims 1 or 2, wherein the variable flow restrictor (114;146) comprises a first section (116;155) arranged to connect the volume (112) with each of the outlets (106), wherein the first section (116) is moveable with respect to the volume (112).

6. Apparatus according to claim 5, wherein the first section (116; 155) is either rotatable or linearly moveable with respect to the volume (112).

7. Apparatus according to claim 5, wherein the first section (116) comprises a drum rotatable about a longitudinal axis, said drum comprising a series of through-holes each arranged to connect an outlet (106) with the volume (112).

8. Apparatus according to claim 7, wherein each through-hole cooperates with an aperture (41A-C) in the volume (112) to allow gas to exit the volume (112) such that movement of the first section (116) relative to the volume (112) enables provision of a continuous range of rates of flow between a first and second flow rate.

9. Apparatus according to claim 5, wherein the first section (155) comprises a series of needle valves (150) each arranged to connect an outlet with the volume.

10. Apparatus according to claim 9, wherein the rate of flow of gas through each needle valve (150) can be set independently of one another.

11. Apparatus according to claim 9, wherein the series of needle valves (150) comprises a plate section having a series of apertures (148) to allow gas to pass to the outlet, and a series of adjustable stops (150) each arranged to cooperate with an aperture (148) to restrict the flow of gas through the aperture (148).

12. Apparatus according to claim 11, wherein the plate and stops (150) are moveable with respect to one another to allow adjustment of the rate of flow of gas through each aperture (148).

13. Apparatus according to claim 9, wherein each needle valve (150) can be pre-set to a given flow rate such that the flow through each needle valve (150) is predetermined and proportional to the other needle valves (150).

14. Apparatus according to claim 1, further comprising control orifices (43) arranged so that gas can be supplied to the respective purge ports (13) at proportionally fixed gas flow rates.

## Patentansprüche

1. Spülgas-Zufuhreinrichtung (102) für eine mehrstufige Vakuumpumpe, mit:
einem Gaseinlass (104) in Strömungsverbindung mit einer Mehrzahl von Gasauslässen (106) zum Zuführen von Gas zu jeweiligen Spülöffnungen (13) einer mehrstufigen Vakuumpumpe (7); und
einem Strömungsregler, der unmittelbar stromauf der Gasauslässe (106) angeordnet ist, wobei der Strömungsregler einen Einlass zur Aufnahme von Gas, ein Volumen (112) zum Halten von Gas unter einem gegebenen Druck, und eine variable Strömungsdrossel (114; 146) aufweist, die zwischen den Volumen (112) und jedem der Auslässe (106) angeordnet ist,
**dadurch gekennzeichnet, dass** die variable Strömungsdrossel (114; 146) mit Bezug auf das Volumen (112) beweglich ist, um eine kontinuierliche Veränderung der Gasströmung im Verhältnis zu jedem der Auslässe (106) zwischen einer ersten und einer zweiten Strömungsrate zu erleichtern.

2. Einrichtung nach Anspruch 1, wobei die variable Strömungsdrossel (114; 146) so angeordnet ist, dass sie einen kontinuierlichen Bereich von Strömungsraten zwischen einer ersten und einer zweiten Strömungsrate bereitstellt.

3. Einrichtung nach Anspruch 2, wobei die erste Strömungsrate eine vorgegebene maximale Strömungsrate durch die Auslässe (106) ist.

4. Einrichtung nach Anspruch 2, wobei die zweite Strömungsrate eine vorgegebene minimale Strömungsrate ist, oder wobei die zweite Strömungsrate Null ist.

5. Einrichtung nach einem der Ansprüche 1 oder 2, wobei die variable Strömungsdrossel (114; 146) einen ersten Abschnitt (116; 155) aufweist, der dafür angeordnet ist, das Volumen (112) mit jedem der Auslässe (106) zu verbinden, wobei der erste Abschnitt (116) mit Bezug auf das Volumen (112) beweglich ist.

6. Einrichtung nach Anspruch 5, wobei der erste Abschnitt (116; 155) mit Bezug auf das Volumen (112) entweder drehbar oder linear beweglich ist.

7. Einrichtung nach Anspruch 5, wobei der erste Abschnitt (116) eine Trommel aufweist, die um eine Längsachse drehbar ist, wobei die Trommel eine Reihe von Durchgangsöffnungen aufweist, die jeweils zur Verbindung eines Auslasses (106) mit dem Volumen (112) angeordnet sind.

8. Einrichtung nach Anspruch 7, wobei jede Durchgangsöffnung mit einer Öffnung (41A-C) in dem Volumen (112) zusammenwirkt, um Gas aus dem Volumen (112) austreten zu lassen, so dass eine Bewegung des ersten Abschnitts (116) relativ zu dem Volumen (112) das Vorsehen eines kontinuierlichen Bereichs von Strömungsraten zwischen einer ersten und einer zweiten Strömungsrate ermöglicht.

9. Einrichtung nach Anspruch 5, wobei der erste Abschnitt (155) eine Reihe von Nadelventilen (150) aufweist, die jeweils zur Verbindung eines Auslasses mit dem Volumen angeordnet sind.

10. Einrichtung nach Anspruch 9, wobei die Gasströmungsrate durch jedes Nadelventil (150) unabhängig voneinander eingestellt werden kann.

11. Einrichtung nach Anspruch 9, wobei die Reihe von Nadelventilen (150) einen Plattenabschnitt mit einer Reihe von Öffnungen (148) aufweist, um Gas zu dem Auslass gelangen zu lassen, und eine Reihe von einstellbaren Stoppern (150) aufweist, die jeweils zum Zusammenwirken mit einer Öffnung (148) zur Drosselung der Gasströmung durch die Öffnung (148) angeordnet sind.

12. Einrichtung nach Anspruch 11, wobei die Platte und die Stopper (150) mit Bezug zueinander beweglich sind, um eine Einstellung der Gasströmungsrate durch jede Öffnung (148) zu ermöglichen.

13. Einrichtung nach Anspruch 9, wobei jedes Nadelventil (150) auf eine gegebene Strömungsrate voreingestellt werden kann, so dass die Strömung durch jedes Nadelventil (150) vorbestimmt und proportional zu den anderen Nadelventilen (150) ist.

14. Einrichtung nach Anspruch 1, die weiter Steueröffnungen (43) aufweist, die so angeordnet sind, dass Gas durch die jeweiligen Spülöffnungen (13) mit proportional festgelegten Gasströmungsraten zugeführt werden kann.

## Revendications

1. Appareil d'alimentation en gaz de purge pour pompe à vide multicellulaire (102), comprenant :
une entrée de gaz (104) en communication fluidique avec une pluralité de sorties (106) de gaz permettant d'alimenter en gaz des ports de purge (13) respectifs d'une pompe à vide multicellulaire (7) ; et
un dispositif de commande d'écoulement disposé immédiatement en amont des sorties (106) de gaz, le dispositif de commande d'écoulement comprenant une entrée permettant de recevoir du gaz, un volume (112) permettant de contenir du gaz à une pression donnée, et un restricteur d'écoulement variable (114 ; 146) disposé entre le volume (112) et chacune des sorties (106),
**caractérisé en ce que** le restricteur d'écoulement variable (114 ; 146) est mobile par rapport au volume (112) pour faciliter une variation continue de l'écoulement de gaz en proportion vers chacune des sorties (106), entre un premier et un second débit d'écoulement.

2. Appareil selon la revendication 1, dans lequel le restricteur d'écoulement variable (114 ; 146) est agencé pour fournir une plage continue de débits d'écoulement entre un premier et un second débit d'écoulement.

3. Appareil selon la revendication 2, dans lequel le premier débit d'écoulement est un débit d'écoulement maximal prédéterminé à travers les sorties (106).

4. Appareil selon la revendication 2, dans lequel le second débit d'écoulement est un débit d'écoulement minimal prédéterminé, ou dans lequel le second débit d'écoulement est zéro.

5. Appareil selon l'une quelconque des revendications 1 ou 2, dans lequel le restricteur d'écoulement variable (114 ; 146) comprend une première section (116 ; 155) agencée pour raccorder le volume (112) à chacune des sorties (106), dans lequel la première section (116) est mobile par rapport au volume (112).

6. Appareil selon la revendication 5, dans lequel la première section (116 ; 155) est soit rotative soit mobile de manière linéaire par rapport au volume (112).

7. Appareil selon la revendication 5, dans lequel la première section (116) comprend un tambour rotatif autour d'un axe longitudinal, ledit tambour comprenant une série de trous débouchants agencés chacun pour raccorder une sortie (106) au volume (112).

8. Appareil selon la revendication 7, dans lequel chaque trou débouchant coopère avec une ouverture (41A-C) dans le volume (112) pour permettre à du gaz de sortir du volume (112) de sorte qu'un mouvement de la première section (116) relativement au volume (112) rende possible une fourniture d'une plage continue de débits d'écoulement entre un premier et un second débit d'écoulement.

9. Appareil selon la revendication 5, dans lequel la première section (155) comprend une série de vannes à aiguilles (150) agencées chacune pour raccorder une sortie au volume.

10. Appareil selon la revendication 9, dans lequel le débit d'écoulement de gaz à travers chaque vanne à aiguille (150) peut être réglé indépendamment d'un autre.

11. Appareil selon la revendication 9, dans lequel la série de vannes à aiguilles (150) comprend une section plaque ayant une série d'ouvertures (148) pour permettre à du gaz de passer vers la sortie, et une série de butées (150) ajustables agencées chacune pour coopérer avec une ouverture (148) pour restreindre l'écoulement de gaz à travers l'ouverture (148).

12. Appareil selon la revendication 11, dans lequel la plaque et les butées (150) sont mobiles par rapport à une autre pour permettre un ajustement du débit d'écoulement de gaz à travers chaque ouverture (148).

13. Appareil selon la revendication 9, dans lequel chaque vanne à aiguille (150) peut être préréglée sur un débit d'écoulement donné de sorte que l'écoulement à travers chaque vanne aiguille (150) soit prédéterminé et proportionnel aux autres vannes à aiguilles (150).

14. Appareil selon la revendication 1, comprenant en outre des orifices de commande (43) agencés de sorte que du gaz puisse alimenter les ports de purge (13) respectifs à des débits d'écoulement de gaz fixes de manière proportionnelle.
